# DEMANDE DE BREVET EUROPEEN

(11) **EP 2 230 224 A1**
(43) Date de publication de la demande: **22.09.2010**
(21) Numéro de dépôt: 09380047.2
(22) Date de dépôt: 10.03.2009
(51) Int. Cl.: C04B 28/10

(54) **Blocs et panneaux écologiques autoportants préfabriqués à partir de déchets chimiques**

(71) Demandeur: Trenzametal, S.L., 28223 Pozuelo de Alarcon (Madrid) (ES)
(72) Inventeur: Bermejo Sotillo, Miguel Angel, 49006 Zamora (ES)
(74) Mandataire: Manzano Cantos, Gregorio

(57) **Abrégé**

Blocs et panneaux préfabriqués écologiques autoportants fabriqués industriellement par extrusion ou par moulage à partir de déchets chimiques constitués par des panneaux ou blocs autoportants, avec des applications dans la construction de bâtiments et de routes, composés, essentiellement par des déchets calciques, fondamentalement l'hydroxyde de calcium (Ca(OH)₂), absorbant actif du CO₂ environnemental, provenants de la fabrication industrielle de l'acétylène (C₂H₂) à partir de carbure de calcium (CaC₂) et plus concrètement de boues ou coulis résiduaires de ladite fabrication.

## Description

L'objet de cette invention ce sont des panneaux ou des blocs autoportants, avec des applications dans les bâtiments et le génie civile, préfabriqués industriellement par moulage ou par extrusion, essentiellement avec des déchets calciques, fondamentalement de l'hydroxyde de calcium (Ca(OH)₂), absorbant actif du CO₂ environnemental, provenants de la fabrication industrielle de l'acétylène (C₂H₂) à partir de carbure de calcium (CaC₂).

Les blocs et panneaux, objet de l'invention incorporent comme composants majoritaires de la masse totale finale et principaux éléments réactifs de cémentation, la totalité des matériaux solides de déchets qui apparaissent dans les coulis et boues résiduaires du procédé industriel d'obtention de l'acétylène, en le recyclant complètement, sans d'autres frais énergétiques significatifs que ceux du transport du lieu où ils sont produits au lieu où ils sont recyclés, en constituant un produit original à caractéristiques écologiques très positives avec récupération de déchets impurs à coefficient élevé d'impact environnemental.

### ANTECEDENTS DE L'INVENTION.

IL n'y a aucun produit original constitué avec la structure et le but des blocs ou panneaux préfabriqués de l'invention et, en aucun cas, aucun ayant des conditions recyclés intégré par l'hydroxyde de calcium (Ca(OH)₂).

Dans l'état de l'art le plus proche nous pouvons mentionner le document PCT/ES98/00154 qui consiste en un produit de " Material-àrido-polimérico para la construcción" (Matériau aride polymérique pour le bâtiment) qui est présenté sous la forme de panneau, briques, dalles, etc. et
caractérise un matériau préfabriqué de basse densité, d'un moyen inférieur à 500 kg/m³, avec d'excellentes propriétés de résistance mécanique et aux agents atmosphériques, de manipulation aisée, ignifuge, bon isolant thermique et, également, isolant acoustique, ainsi qu'avec un coût de production modéré, sur la base d'une argile expansée, agglutinée au moyen d'une résine, occasionnellement avec des charges en sandwich de dos mailles de fibre de verre, avec des mousses synthétiques et/ou de la résine avec catalyseur.

### DESCRIPTION DE L'INVENTION

La composition caractéristique des déchets au moyen desquels on obtient les panneaux et blocs écologiques, préfabriqués et autoportants comprend, en outre du composé majoritaire hydroxyde de calcium (Ca(OH)₂), divers composés minoritaires, entre autres, et sans que l'on puisse fixer avec exactitude, tous et sans exclusion de toute autre substance dû aux impuretés et à la variété des composés de calcium et carbones originaires qui apparaissent dans les procédés antécédents dans la production de l'acétylène (C₂H₂), les suivants: oxyde d'aluminium (Al₂O₃) oxyde ferrique (Fe₂O₃), oxyde de magnésium (MgO), silice (SiO₂), carbonate de calcium (CO₃Ca), hydroxyde de calcium (Ca(OH)₂), ion sulfure (S⁼), ion sulfate (SO₄⁼)

Les blocs et panneaux écologiques préfabriqués autoportants, objet de l'invention, fabriqués par extrusion ou en versant la masse dans des moules (moulage), ont été conçus dans leur composition préférée après avoir spécifié une série de sollicitations fonctionnelles en tenant compte que leur mission est d'être utilisés comme matériau de construction dans les routes comme barrières de protection et barrières acoustiques, et dans la construction de bâtiments appliqué sur les façades, et les toits pour augmenter remarquablement son efficacité énergétique et contribuer à la durabilité de l'environnement en réunissant comme caractéristiques principales le fait d'être un bon isolant thermique et acoustique, imperméable, transpirable, résistant au feu, biocide, facilement recyclable, de faible consommation énergétique dans le procédé de fabrication, absorbant très puissant de CO₂ pendant toute sa vie utile en retournant constamment à sa composition originaire pierreuse naturelle de calcite et qui, en leur fournissant de formes géométriques particulières, ils peuvent se comporter comme des éléments efficaces d'imperméabilisation, clôture structurale, barrière acoustique et barrière contre la propagation du feu.

Afin d'optimiser ses procédés de fabrication, aussi bien par extrusion que par moulage, son comportement rhéologique (mouvement des fluides), est accélérer la capture de CO₂ environnemental, améliorer ses propriétés mécaniques, thermiques et acoustiques, dans le mélange de coulée, on prévoit l'incorporation au mélange d'additifs tels que des accélérateurs de durcissement, des fluidifiants, des airéateurs, et des échangeurs thermiques, etc., qui dans leur ensemble participent dans une quantité bien moindre que l'hydroxyde de calcium.

On peut également apporter des charges inorganiques légères ou des microsphères en verre creuses et des charges calciques recyclées.

La masse obtenue, dans quelques-unes de ses applications et formes géométriques particulières, sera versée dans des moules au sein desquels sont disposées des mailles ou grilles de telle manière que celles-ci sont incorporées aux blocs et panneaux une fois pris.

Optionnellement, comme recouvrement des surfaces des blocs et panneaux de l'invention, on peut incorporer dans la phase de traitement des matières, des lames, planches et plaques de différentes matières qui seront intégrées dans le panneau comme recouvrement extérieur pour obtenir des panneaux et blocs stratifiés. On peut également renforcer la surface des panneaux, spécialement ceux fabriqués par la technique d'extrusion, en les revêtant d'un tissu en fibre de verre fixé au moyen de résines de siloxane.

Une fois décrite convenablement la nature de l'invention, on fait observer aux effets opportuns que celle-ci n'est pas limitée aux détails exacts de cet exposé, mais au contraire, on y introduira les modifications considérées opportunes, si toutefois cela n'altère pas les caractéristiques essentielles de l'invention, revendiquées à la suite.

## Revendications

1. BLOCS ET PANNEAUX ÉCOLOGIQUES AUTOPORTANTS PRÉFABRIQUÉS A PARTIR DE DÉCHETS CHIMIQUES qui sont **caractérisés en ce qu'**ils sont préfabriqués avec le mélange des déchets hétérogènes provenants de la fabrication industrielle de l'acétylène(C₂H₂) à partir du carbure de calcium (CaC₂) et qui contiennent fondamentalement de l'hydroxyde de calcium (Ca(OH)₂), absorbant actif du CO₂ environnemental, et divers composés minoritaires, comme par exemple: oxyde d'aluminium (Al₂O₃), oxyde ferrique (Fe₂O₃), oxyde de magnésium (MgO), silice (SiO₂), carbonate de calcium (CO₃Ca), hydroxyde de calcium (Ca(OH)₂), ion sulfure (S⁼), ion sulfate (SO₄⁼)

2. BLOCS ET PANNEAUX ÉCOLOGIQUES AUTOPORTANTS PRÉFABRIQUÉS A PARTIR DE DÉCHETS CHIMIQUES selon la revendication 1, le comportement rhéologique (mouvement des fluides) du mélange, étant **caractérisé en ce qu'**il accélère la capture de CO₂ environnemental, dans leurs procédés de fabrication, par moulage et par extrusion.

3. BLOCS ET PANNEAUX ÉCOLOGIQUES AUTOPORTANTS PRÉFABRIQUÉS A PARTIR DE DÉCHETS CHIMIQUES selon la revendication 1, le mélange étant **caractérisé ce que** l'hydroxyde de calcium (Ca(OH)₂) intervient avec une participation entre 65 et 90 % du total de la masse recyclée, en exceptant les matières de renfort structurel et de revêtement.

4. BLOCS ET PANNEAUX ÉCOLOGIQUES AUTOPORTANTS PRÉFABRIQUÉS A PARTIR DE DÉCHETS CHIMIQUES selon la revendication 1, le mélange étant **caractérisé en ce qu'**il incorpore d'autres additifs à fonction secondaire tels que des accélérateurs de durcissement, fluidifiants, airéateurs, et échangeurs thermiques.

5. BLOCS ET PANNEAUX ÉCOLOGIQUES AUTOPORTANTS PRÉFABRIQUÉS A PARTIR DE DÉCHETS CHIMIQUES selon la revendication 1, le mélange étant **caractérisé en ce qu'**il incorpore des charges inorganiques légères ou des microsphères en verre creuses et des charges calciques recyclées.

6. BLOCS ET PANNEAUX ÉCOLOGIQUES AUTOPORTANTS PRÉFABRIQUÉS A PARTIR DE DÉCHETS CHIMIQUES selon la revendication 1, le mélange dans les applications fabriquées avec la technique de moulage, étant **caractérisé en ce que** la masse résultante comprend des mailles ou grilles, de telle manière qu'elles sont incorporées aux blocs et panneaux une fois pris

7. BLOCS ET PANNEAUX ÉCOLOGIQUES AUTOPORTANTS PRÉFABRIQUÉS A PARTIR DE DÉCHETS CHIMIQUES selon la revendication 1, le mélange comme des matières de recouvrement étant **caractérisé en ce qu'**il incorpore, par exemple : peintures, lames, planches et plaques de différentes matières qui sont extérieurement intégrées pour obtenir des panneaux et des blocs à composition stratifiée.

8. BLOCS ET PANNEAUX ÉCOLOGIQUES AUTOPORTANTS PRÉFABRIQUÉS A PARTIR DE DÉCHETS CHIMIQUES selon les revendications 1 et 7, les pièces préfabriquées avec la technique d'extrusion, étant **caractérisées en ce que** leur surface est renforcée et revêtue d'un tissu de fibre de verre fixé au moyen de résines de siloxane.

## Revendications modifiées

### Revendications modifiées conformément à la règle 137(2) CBE.

**1.** Éléments écologiques préfabriqués à partir de déchets chimiques, du type qui sont fabriqués industriellement avec des mortiers et des bétons par moulage ou par extrusion, pour être utilisés dans des constructions, des travaux publics et des espaces urbains, qui sont **caractérisés en ce que** durant leur vie utile ils ont une capacité élevée de fixation du CO₂ environnemental fabriqués avec un mélange qui agit comme matière cimentable majoritaire, hétérogène, obtenu à partir de la solution aqueuse sous forme de boues provenant de la fabrication industrielle de l'acétylène (C₂H₂) à partir du carbure de calcium, composée fondamentalement à partir d'hydroxyde de calcium (Ca(OH)₂), absorbant actif du CO₂ environnemental, et divers composés minoritaires, oxyde d'aluminium (Al₂O₃), oxyde ferrique (Fe₂O₃), oxyde magnésique (MgO), silice (SiO₂), carbonate de calcium (CO₃Ca), ion sulfure (S⁼), ion sulfate (SO₄⁼), dont la dégradation naturelle de la capacité réactive d'agrégation des particules des déchets et de la capacité d'absorption de CO₂ par transformation de l'hydroxyde de calcium (Ca(OH)₂) en carbonate de calcium (CO₃Ca) est bloquée en maintenant en permanence les déchets durant toutes les phases de manipulation en solution colloïdale ou décantés dans la solution aqueuse originelle sans contact avec l'air, en utilisant comme isolant la couche d'eau originelle qui flotte dans les récipients où ils sont conservés et transportés et dans les phases postérieure du procédé productif, jusqu'à leur incorporation aux éléments préfabriqués, dans lesquels il n'est pas possible de maintenir la solution colloïdale du déchet, celui-ci est maintenu conditionné à vide dans des conteneurs hermétiquement fermés en évitant que le contenu de l'eau originel soit inférieur à 25% du poids total.

**2.** Éléments écologiques préfabriqués à partir de déchets chimiques selon la revendication 1, dans lesquels la masse de déchets incorporée est **caractérisée en ce que** l'hydroxyde de calcium (Ca(OH)₂) contenu intervient avec une participation entre le 65 et le 90% du total du poids total de la masse de déchet recyclée incorporée aux produits.
